(19)

Europäisches
Patentamt
European
Patent Office
Office européen
des brevets

(11) **EP 2 161 600 A1**

(12) **EUROPEAN PATENT APPLICATION**

(43) Date of publication:
**10.03.2010 Bulletin 2010/10**

(51) Int Cl.:
**G02B 6/00** *(2006.01)*

(21) Application number: **08163930.4**

(22) Date of filing: **09.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **TPO Displays Corp.**
**Miao-Li County (TW)**

(72) Inventors:
• **Creusen, Martin**
  **6321 BB Wijlre (NL)**
• **Toussaint, Serge**
  **6419 SC Heerlen (NL)**

(74) Representative: **Ketelaars, Maarten F.J.M.**
**Nederlandsch Octrooibureau**
**Postbus 29720**
**2502 LS Den Haag (NL)**

(54) **Liquid crystal display device containing a light guide**

(57)     The invention relates to liquid crystal display (1) comprising image forming layers (10), at least one indirect light source (20) and a light guide (30). The light guide (30) comprises a first side (35) facing the image forming layers (10), a second side (36) opposite of the first side (35), and an in-coupling side (34) facing the at least one indirect light source (20). The in-coupling side (34) is a beveled in-coupling side (34').

Fig 3a

**Description**

TECHNICAL FIELD

The invention relates to a liquid crystal display, a light guide for use in a liquid crystal display and a device, comprising such a liquid crystal display.

STATE OF THE ART

Liquid crystal displays (LCD-displays) are known in the field. A LCD-display comprises a number of pixel elements, usually arranged in a matrix formation, wherein each pixel element may be controlled individually to transmit and / or reflect light or not. By selectively controlling each pixel, a (moving) image may be created.
Each pixel may be divided in e.g. three sub-pixels, each sub-pixel comprising a different color filter (e.g. red, green, blue), thereby allowing the creation of color images.
The LCD-display may comprise a number of image forming layers, such as

- a LC-layer comprising an array of liquid crystal elements,
- two polarizing layers (one on each side of the LCD layer),
- two electrode layers (one on each side of the LCD layer) arranged to address specific pixels by applying a voltage to the corresponding part of the LC-layer
- a color filter layer to provide different (sub)-pixels with different colors.

The skilled person will understand that other layers and elements may be provided to form a LCD-display. As will be understood, these image forming layers as described so far basically provide a shutter function, i.e. are arranged to transmit and / or reflect or block light, possibly with a certain color, for a specific (sub-)pixel.
However, to form an image, a light source is required. Four types of LCD-displays are known:

- ambient LCD-displays,
- indirect front light LCD-displays,
- direct back light LCD-displays, and
- indirect back light LCD-displays.

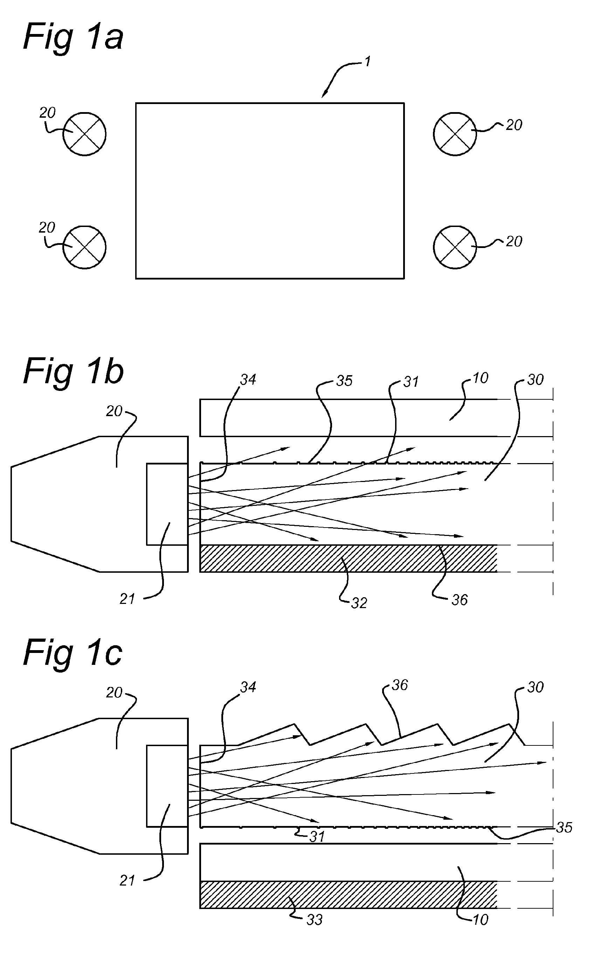

Also combinations of these four types are known.
Ambient LCD-displays use ambient light to form an image. The ambient light falls on the LCD-display, travels through the image forming layers, is reflected by a reflective layer and travels back through the image forming layers or is blocked to form an image. The image forming layers function as a reflective LCD.
The other three types of LCD-displays use a dedicated light source. The light source may be any type of suitable light source, such as a LED (Light Emitting Diode).
The light generated by this light source is distributed evenly over the surface of the image forming layers and travels through the image forming layers (or is blocked) to emit the LCD-display to form an image.
Direct back-light displays use a light source that is provided directly behind the image forming layers (seen from a viewer's point of perspective).
The indirect front and back light LCD displays use light from light sources provided along the edge of the LCD-display, being distributed over the image forming layers via a light guide.
In case indirect back light is used, the light guide is positioned behind the image forming layers (seen from a viewer's point of perspective) and in case indirect front light is used, the light guide is positioned in front of the image forming layers (seen from a viewer's point of perspective). These variants are explained in more detail below with reference to Fig.'s 1b and 1c.
An example of an LCD-display using indirect light is shown in Fig. 1a, schematically showing a front view of a LCD-display 1 as seen from a users point of perspective, comprising image forming layers 10 and a number of indirect light sources 20 positioned along the edge of the LCD-display 1.

Fig. 1b and 1c respectively show an indirect back light and an indirect front light LCD-display 1. In both Fig. 1b and 1c the viewer is positioned on top of the figure looking down.
Fig. 1b schematically depicts a cross sectional view of an indirect back light LCD-display 1. The figure shows an indirect back light source 20 emitting light into a light guide 30 which distributes the light to image forming layers 10. The light guide comprises a first side 35 facing the image forming layers 10 and a second side 36, opposite the first layer 35.

Fig. 1c schematically depicts a cross sectional view of an indirect front light LCD-display 1. As can be seen, the light guide 30 and the image forming layers are positioned differently with respect to Fig. 1b. The figure shows an indirect front light source 20 emitting light into light guide 30 which distributes the light to image forming layers 10. The image forming layers 10 reflect the light back through the light guide 30 towards a viewer. Again, the light guide 30 comprises a first side 35 facing the image forming layers 10 and a second side 36, opposite the first layer 35.

Both in Fig. 1b and 1c, the light guide 30 may be a layer made of poly-carbonate. The light guide 30 may be an optical transparent layer, plate or film (made of e.g. PC), in which light is transported which enters the light guide 30 at in-coupling side 34, which is facing a light emission window 21 of the light source 20.

The in-coupling side 34 of the light guide 30, i.e. the side of the light guide 30 facing the indirect light source 20, may be provided with in-coupling features (e.g. wave shaped or prism shaped structures, not shown), which improve the uniformity of the light distribution across the light guide 30.

In order to evenly distribute the light of the indirect light source 20 (or indirect lights sources 20), an out-coupling structure 31 may be provided on first side 35, facing the image forming layers 10. The out-coupling structure 31 may be a structure formed by out-coupling features, such as prisms, dots or any other kind of surface corrugation which enables the out-coupling of light from the light guide 30. By varying the density of these out-coupling features, an even light distribution can be obtained.

In case of the indirect back light LCD-display, the second side 36 may comprise a reflective layer 32 to prevent light loss. In case of the indirect front light LCD-display, the rear side of the image forming layers 10 may comprise a reflective layer 33.

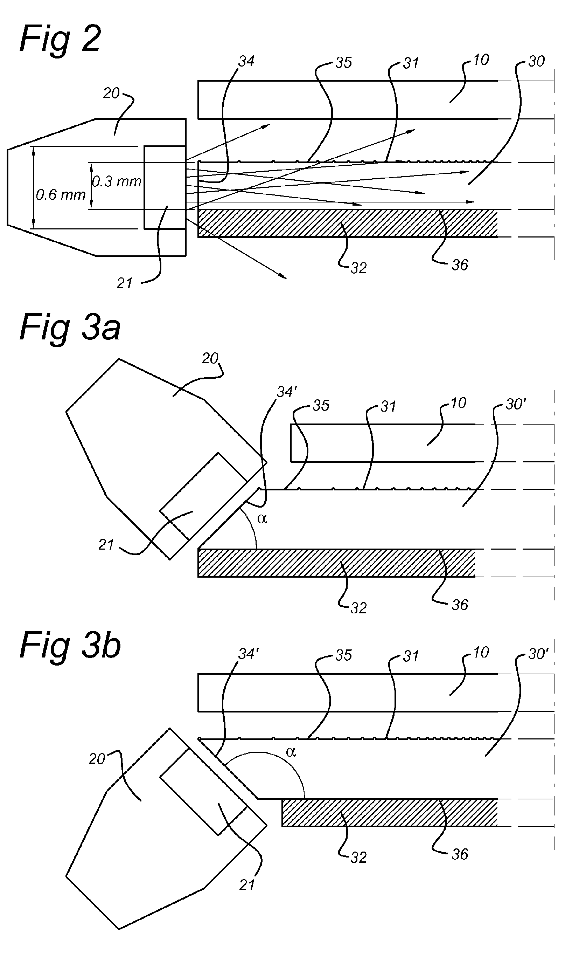

Fig. 2 shows a cross sectional view of a indirect back light LCD-display 1 in more detail, showing image forming layers 10, one indirect light source 20 and light guide 30.

In the recent years, the thickness of LCD-displays and the light guide reduced significantly, as is shown in table 1.

**Table 1**

| Year | Approx. thickness LCD-display [mm] | Approx. thickness light guide [mm] |
|------|-----------------------------------|-----------------------------------|
| 2003 | 3 | 0,5 |
| 2005 | 2,6 | 0,4 |
| 2007 | 2 | 0,28 |

The dimensions of the indirect light sources, especially LED's, have also reduced, i.e. the size of the light emission window 21 has been reduced. The effective light output height of a LED is usually somewhat smaller than the actual size of the light emission window 21. So below, the term effective light output height is used to indicate the effective height of the light emission window 21 of the LED.

To avoid additional light in-coupling losses due to a mismatch between the effective light output height and thickness of the light guide 30 (i.e. height of in-coupling side 34), the effective light output height needs to be reduced in line with the light guide thickness. For example, in order to achieve a loss-less in-coupling, the size of the light emission window 21 for a thin light guide of 0.28 mm should be around 0.3 mm (i.e. the effective light output height is smaller than 0.3 mm).

It is known that the luminous intensity of LED's reduces as a function of the LED thickness. Thin LED's produce less light and are less power efficient as they produce less light per Ampere. So, using LED lights with an effective light output height of more than 0,4 mm is still beneficial as these are more power efficient.

However, using a LED as a indirect light source 20 having an effective light output height that is greater than the thickness of the light guide 30 (i.e. height of in-coupling side 34) will result in loss of light. For instance, using a LED with an effective light output height of 0.6 mm in combination with a light guide 30 having a thickness of 0,3 mm will result in unwanted losses, as can be seen in Fig. 2.

So, in conclusion, the reduction of the thickness of the light guide 30 results in a reduced light output of the light guide 30 and consequently a reduced luminance of the LCD-display 1, because:

- if the effective light output height of the LED light 30 is not reduced accordingly (thus using power efficient LED's) the LED-light in-coupling into the light guide is less efficient (see Fig. 2), and,
- if the effective light output height of the LED light 30 is reduced accordingly, LED's are used that produce less light (low luminous intensity) and are less power efficient.

According to the prior art, tapered light guides are provided, i.e. light guides with an increased thickness towards the edge. Such tapered light guides are provided with a widening of the light guide thickness towards the indirect light source in order to match the dimensions of the indirect light source to reduce in-coupling losses. The widening may be provided by a step or by a gradual widening over a part of the complete length of the light guide.

However, light guides having an increased thickness towards the end are more difficult to manufacture, especially for relatively thin light guides (0,4 mm or less). Moreover, when the light guide thickness decreases via a wedge or step, from an initial larger thickness at the incoupling side 34 towards a smaller thickness further away from the incoupling side, this will result in light loss.

Therefore, it is an object to provide a LCD-display that overcomes at least one of the above mentioned problems.

SHORT DESCRIPTION

According to an object there is provided a liquid crystal display comprising

- image forming layers,
- at least one indirect light source, and
- a light guide,

wherein the light guide comprises a first side facing the image forming layers, a second side opposite of the first side, and an in-coupling side facing the at least one indirect light source, **characterized in that** the in-coupling side is a beveled in-coupling side. The beveled in-coupling side may be at an angle $\alpha$ with respect to second side, the angle $\alpha$ being different from 90°.

According to an embodiment the image forming layers comprise

- a LC-layer comprising an array of liquid crystal elements,
- two polarizing layers,
- two electrode layers,
- a color filter layer.

According to an embodiment the beveled in-coupling side is at an angle $\alpha$ with respect to second side 36, the angle $\alpha$ is within one of the following ranges:

- $1° < \alpha < 89°$ or $91° < \alpha < 179°$ or

- $5° < \alpha < 85°$ or $95° < \alpha < 175°$ or

- $30° < \alpha < 85°$ or $95° < \alpha < 150°$.

According to an embodiment the image forming layers, the at least one indirect light source and the light guide are arranged to form an indirect back light liquid crystal display.

According to an embodiment the light guide comprises a reflective layer provided on the second side, the reflective layer facing the light guide.

According to an embodiment the light guide comprises a first side reflective layer provided on the first side, the first side reflective layer facing the light guide.

According to an embodiment the front side reflective layer is provided in a region between an edge of the light guide and a start of an out-coupling structure or the image forming layers.

According to an embodiment the image forming layers, the at least one indirect light source and the light guide are arranged to form an indirect front light liquid crystal display.

According to an embodiment the light guide comprises a reflective layer provided on the second side, the reflective layer facing the light guide.

According to an embodiment the reflective layer is provided in a region between an edge of the light guide and a start of an out-coupling structure or the image forming layers.

According to an embodiment the light guide comprises a first side reflective layer provided on the first side, the side reflective layer facing the light guide.

According to an embodiment the front side reflective layer is provided in the region between the edge of the light guide and start of an out-coupling structure or the image forming layers.

According to an embodiment the front side comprises an out-coupling structure comprising out-coupling features that are distributed in accordance with the beveled in-coupling side.

According to an object there is provided a light guide for use in a liquid crystal display using at least one indirect light source, the light guide comprising a first side arranged to face image forming layers of the liquid crystal display, a second side opposite of the first side, and an in-coupling side facing the at least one indirect light source, **characterized in that** the in-coupling side is a beveled in-coupling side. The beveled in-coupling side may be at an angle α with respect to second side, angle α being different from 90°.

According to an object there is provided a device, comprising a liquid crystal display according to any one of the embodiments.

SHORT DESCRIPTION OF THE DRAWINGS

Embodiments of the invention will now be described, by way of example only, with reference to the accompanying schematic drawings in which corresponding reference symbols indicate corresponding parts, and in which:

- Figure 1a, 1b, 1c schematically depict LCD-displays according to the prior art,
- Figure 2 schematically depict a cross sectional view of a prior art LCD-display,
- Figure 3a, 3b, 3c, 3d, 4a, 4b, 4c, 4d schematically depict embodiments,
- Fig. 5a - 5c schematically depict simulations of embodiments.

DETAILED DESCRIPTION

According to an embodiment, a light guide 30' is provided having a beveled or slanted in-coupling side 34'. Fig. 3a shows such a light guide 30'. The beveled in-coupling side 34' may be under an angle α with respect to second side 36. There is provided a liquid crystal display comprising image forming layers 10, at least one indirect light source 20, and a light guide 30', wherein the light guide 30' comprises a first side 35 facing the image forming layers 10, a second side 36 opposite of the first side 35, and an in-coupling side 34 facing the at least one indirect light source 20, wherein the in-coupling side 34 is a beveled in-coupling side 34'

As explained above, the image forming layers 10 may comprise a LC-layer comprising an array of liquid crystal elements, two polarizing layers, two electrode layers, and a color filter layer.

It will be understood by a skilled person that these layers may be used to generate an image. The electrode layers are used to apply a voltage over the liquid crystal layer, where a different voltage may be applied per pixel of the image to be formed. The voltage influences the orientation of the liquid crystal molecules.

Light traveling through the image forming layers will be polarized by a first polarizing layer. Next, the light passes through the liquid crystal layer where its direction of polarization may be altered by the liquid crystal layer depending on the orientation of the liquid crystal molecules (and thus the applied voltage). Next, the light meets a second polarizing layer. Depending on the polarization direction of the light when leaving the liquid crystal layer, the light will be able to (partially) pass the second polarizing layer. This allows controlling the light intensity for each pixel individually, thereby allowing forming an image.

The color filter layer may be arranged to provide a certain pixel with a certain color. The color filter may be omitted in case of a black-and-white liquid crystal display.

By putting the in-coupling side 34' at an angle α, the size of the in-coupling 34' is increased with a factor $\propto \left( \dfrac{1}{\sin \alpha} \right)$ without increasing the thickness of the light guide 30'. At the same time, the light source 20 is positioned at a corresponding angle to match the orientation of the beveled in-coupling side 34', as can be seen in Fig. 3a.

According to this embodiment, it is possible to use a light source 20 with an effective light output height that is greater than the thickness of the light guide 30, and still provide a match between the effective light output height and the in-coupling side 34'. The thickness of the light guide 30' may be defined as the shortest distance between first side 35 and second side 36.

The provided embodiment allows using a relatively big indirect light source 20 in combination with a relatively thin light guide 30'. By way of example, the provided embodiment allows using power efficient LED's with an effective light output height of 0,4 mm in combination with a light guide 30' having a thickness of 0,28 mm and an angle α≈45°.

The angle α may be 45°, but may in fact have any suitable value and may for instance be in the range of 1° < α < 89°. According to an alternative angle α between the beveled in-coupling side 34' and second side 36 may be in the range of 91° < α < 179°. Such an embodiment is shown in Fig. 3b.

When taking into account manufacturing margins/tolerances and possibilities, the following ranges may be chosen: 5° < α < 85° and 95° < α < 175°, or 10° < α < 80° and 100° < α < 170°. It will be understood that angles only slightly deviating from 0°, 90° and 180° are difficult to manufacture. Also, α ≈ 90° results in a relatively small increase of the area of the in-coupling side 34' and α ≈ 0° or α ≈ 180° are less interesting as they will not result in a high in-coupling efficiency as the light rays are not directed into the light guide.

According to a further embodiment, the following ranges may be chosen: 30° < α < 85° and 95° < α < 150° (30° < α < 80° and 100° < α < 150°).

As described above, choosing α < 85° and α > 95° may be based on considerations relating to manufacturing margins/tolerances.

The ratio between the effective light output height and the thickness of the light guide 30' may be chosen not to exceed a factor of approximately 2, corresponding to α > 30° and α < 150°, as choosing a factor above 2 may reduce the incoupling efficiency as a result of scattering losses, reducing the possible efficiency gain. This may reduce the efficiency gain as achieved with using a beveled light guide 30'.

Also, choosing a factor above 2, may cause overall LCD module design problems, as it implies positioning the light source at an impractical angle, resulting in a space-consuming and less robust LCD-design.

So, when a light guide thickness of typically 0.2 mm is applied, the effective light output height of the light source may be chosen not to exceed 0.4 mm.

According to an embodiment, the angle α for such a beveled backlight 30' may be chosen as close to 90° as possible, while still providing a match between the in-coupling side 34' and the effective light output height of the indirect light source 20. An overview of possible values for α for combinations of light guide thickness in mm and LED light output heights in mm is provided in table 1 below, where α is chosen as close to 90° while still providing a match between the in-coupling side 34' and the effective light input height of the indirect light source 20.

Table 1 Overview of possible values for α for combinations of light guide thickness [mm] and LED light output heights [mm].

| | Light guide thickness (mm) | | | | | | |
|---|---|---|---|---|---|---|---|
| **Effective** | | **0.2** | **0.25** | **0.3** | **0.35** | **0.4** | **0.45** | **0.5** |
| **light** | **0.3** | 42° | 56° | 90° | - | - | - | - |
| **output** | **0.35** | 35° | 46° | 59° | 90° | - | - | - |
| **height** | **0.4** | 30° | 39° | 49° | 61° | 90° | - | - |
| **(mm)** | **0.45** | 26° | 34° | 42° | 51° | 63° | 90° | - |
| | **0.5** | 24° | 30° | 37° | 44° | 53° | 64° | 90° |
| | **0.55** | 21° | 27° | 33° | 40° | 47° | 55° | 65° |
| | **0.60** | 19° | 25° | 30° | 36° | 42° | 49° | 56° |
| | **0.65** | 18° | 23° | 27° | 33° | 38° | 44° | 50° |

Fig.'s 3a and 3b shows embodiments of an indirect back light LCD-display. Accordingly, Fig.'s 3c and 3d show an indirect front light LCD-display. Similar reference signs refer to similar objects.

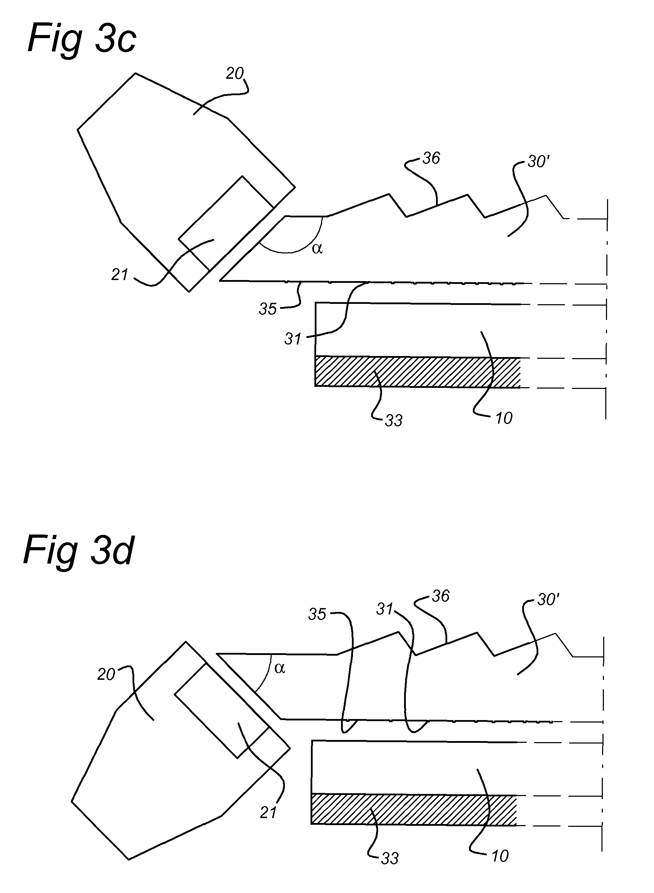

Again, the light guide 30' comprises a first side 35 facing the image forming layers 10 and a second side 36 opposite of the first side 35, although in this case, the first and second side 35, 36 are facing different directions with respect to the indirect back light LCD-display shown in Fig.'s 3a and 3b. In case of the indirect back light LCD-display (Fig. 3a and 3b), the second side 36 may comprise a reflective layer 32 to prevent light loss. In case of the indirect front light LCD-display (Fig. 3c and 3d), the rear side of the image forming layers 10 may comprise a reflective layer 33, which plays a similar role as the reflective layer 32 for the indirect back light LCD-display. Also, in case of the indirect front light LCD-display, the second side 36 may provide a structure to direct the indirect light towards the image forming layers 10 and at the same time allow passage of light coming from the image forming layers towards the user.

It will be understood that the beveled orientation of the light source 20 may influence the out-coupling distribution of light over the surface of the light guide 30'. As a result, a relatively bigger amount of light may be emitted by the light guide 30' in the close vicinity of the light source 20, while a relatively smaller amount of light may be emitted by the light guide 30' further away from the light source 20. This may negatively influence the uniform light distribution of the light guide 30'. To overcome this possible disadvantage two further embodiments are described below.

First and second side reflective layers

In order to provide a more uniform light distribution of the light guide 30'and further increase the efficiency of the light source 20 in combination with the light guide 30', according to a further embodiment, a first side reflective layer 37 may be provided on the first side 35, the first side reflective layer 37 having its reflective layer facing the light guide 30'. The first side light reflective layer 37 may be provided in the vicinity of the light source 20 and may extend over the distance between the in-coupling side 34' and the start of the out coupling structure 31 and/or the start of the image forming layers 10. The start of the out-coupling structure 31 and/or the start of the image forming layers 10 is indicated with reference 39 in the figures.

An example of this is shown in Fig.'s 4a and 4b for embodiments similar to Fig.'s 3a and 3b respectively, now comprising a first side reflective layer 37.

The first side reflective layer 37 may be provided along the complete circumference of the light guide 30' or alternatively only along (part of the) edges in the vicinity of light sources 20.

A further example of this is shown in Fig.'s 4c and 4d showing embodiments of indirect front light LCD-displays, similar to the to Fig.'s 3c and 3d respectively, now comprising a first side reflective layer 37.

Indirect front light LCD-displays may also comprise second side reflective layers 38 provided on the second side 36, to further increase the efficiency of the light source 20 in combination with the light guide 30'. Again, the second side light reflective layer 38 may be provided in the vicinity of the light source 20 and may extend over the distance between the in-coupling side 34' and the start 39 of the out coupling structure 31 and/or the start 39 of the image forming layers 10.

It will be understood that indirect front light LCD-displays 1 may comprise a first side reflective layer 37, a second side reflective layer 38 or a combination of a first and second side reflective layer 37.

Light out-coupling feature distribution

As mentioned, the beveled orientation of the light source 20 may influence the out-coupling distribution of light over the surface of the light guide 30'. In order to compensate for this effect, the out-coupling structure 31 may be adjusted accordingly.

The out-coupling features may be adjusted (i.e. in density variation or diameter variation in the case of dots) to compensate for this. As explained above, the out-coupling structure 31 may be formed by out-coupling features, such as dots or prisms.

It will be understood that the exact density distribution may be optimized for each LCD module design. Typically several design iterations are required during each module design to optimize the light output uniformity. In general, for smaller angles $\alpha$ the dot density will be more challenging to optimize for better light output uniformity than for larger angles $\alpha$.

Device

The embodiments further relate to a device comprising a liquid crystal display according to any one of the embodiments described above, i.e. comprising a beveled in-coupling side 34'. Such a device may be a television, a laptop, a computer, a telephone, a handheld, a navigation apparatus, etc.

Simulations

The efficiency of light guide 30' with a beveled in-coupling side 34' has been simulated and compared to conventional light guide in-coupling technologies. The light guide 30' with the beveled in-coupling side 34' in the case in which the following assumptions were done:

- indirect back light LCD-display
- effective light output height of LED: 0.45 mm
- light guide thickness: 0.3 mm

and the angle is chosen such that the in-coupling side 34' substantially matches the effective light output height of the LED (approx. 42°), results in an approximately 10% higher in-coupling efficiency. This means that by using the beveled light guide 30' the light losses are reduced by 10% with respect to the situation depicted in Fig 2, in which there is an effective light output height of 0.45mm in front of a 0.3 mm light guide height.

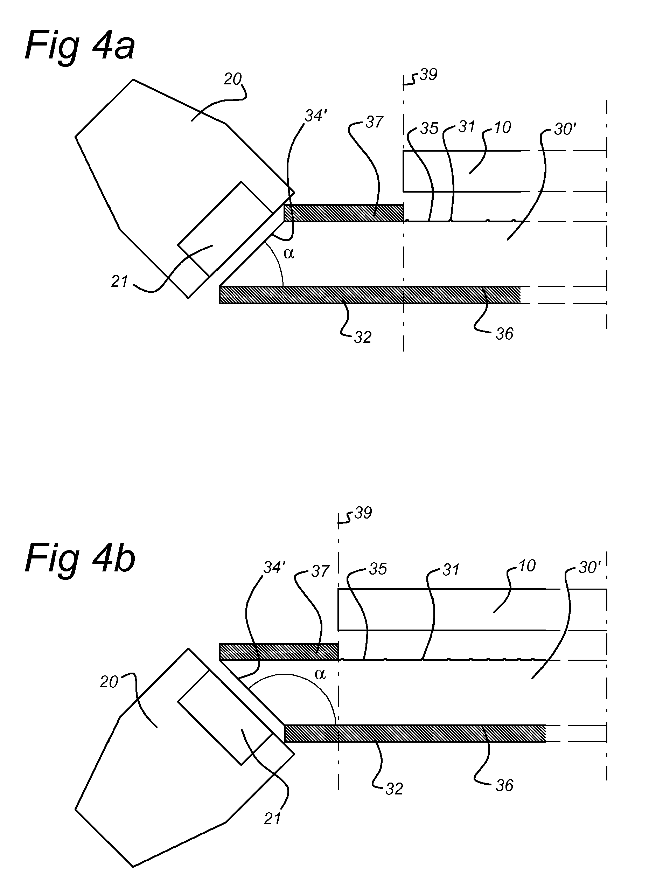

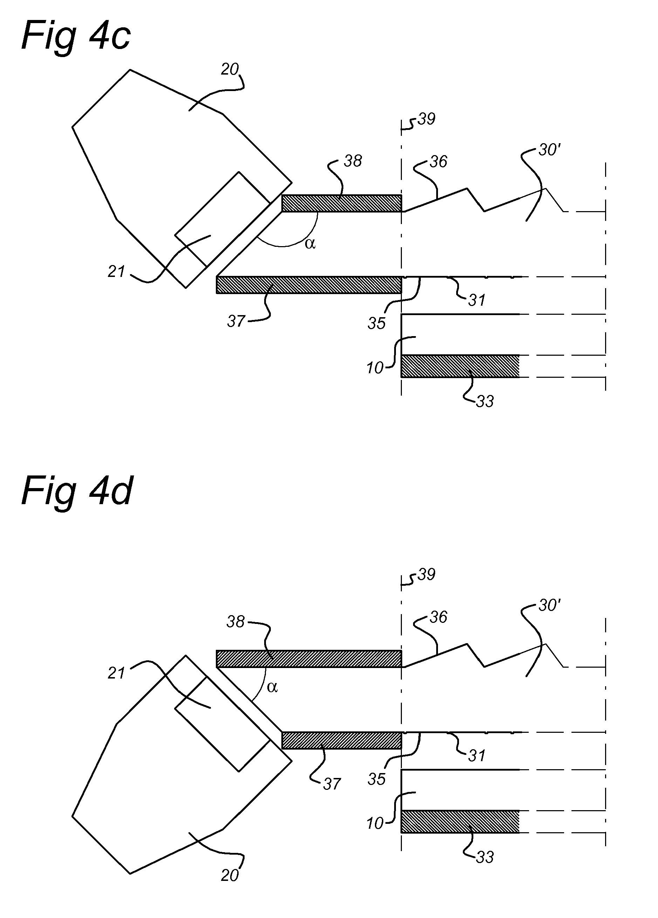

A first simulation I was performed based on a set-up as shown in and described with reference to Fig. 2. A second simulation II was performed based on a set-up as shown in and described with reference to Fig. 3a. A third simulation III was performed based on a set-up as shown in and described with reference to Fig. 4a.

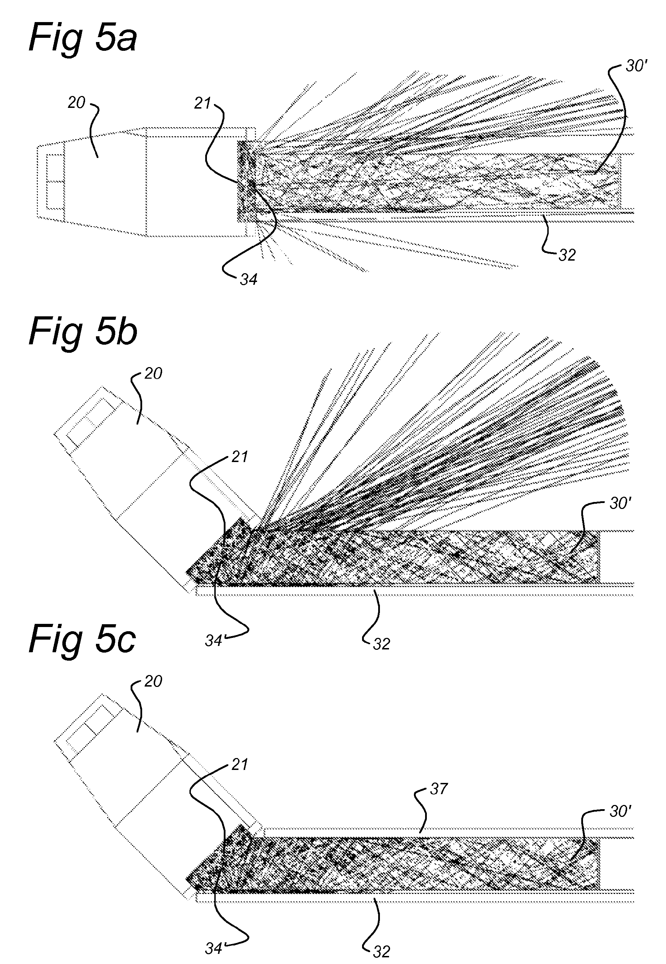

Simulation I resulted in normalized flux values of 0.64. A visualisation of simulation I is provided in Fig. 5a. As can be seen in Fig. 5a, light losses occur at the interface of the light source 20 and the light guide 30.

The normalized flux value is defined as the ratio of the light flux that hits a virtual detection plane (which is in fact a cross-sectional plane of the light guide, see fig.5a) and the total light flux which is emitted by the LED. The detection plane is positioned at 1 mm from the light guide start and has the same height and width of the light guide plate.

Simulation II resulted in normalized flux values of 0.70. A visualization of simulation II is provided in Fig. 5b. This simulation includes a beveled light guide (with only a bottom reflector 32). As can be seen in Fig. 5b, substantially no light loss occurs at the interface of the light source 20 and the light guide 30', although some indirect losses can be seen of light, which is initially directed from the LED towards the bottom reflector and finally is escaping the light guide at the top side of the light guide near the of the light guide 30.

Simulation III resulted in normalized flux values of 0.756. A visualization of simulation III is provided in Fig. 5c. As can be seen in Fig. 5c, substantially no light loss occurs at the interface of the light source 20 and the light guide 30'. In this case an additional top reflector strip is positioned just at the start of the light guide in order to re-direct light back into the lightguide, which was initially lost in situation II as shown in Fig 5b.

Further remarks

The embodiments described above may increase the effective in-coupling height of the light guide 30 up to 1.41 (i.e. $\sqrt{2}$) times a non-beveled in-coupling side 34. This is especially an advantage for light guide technologies in which no special light in-coupling structure can be applied (e.g. tapered light guide), such as thin light guides, also referred to as light guide films.

The embodiments described may be applied in transmissive LCD-displays as well as transflective LCD-displays.

The descriptions above are intended to be illustrative, not limiting. Thus, it will be apparent to one skilled in the art that modifications may be made to the invention as described without departing from the scope of the claims set out below.

**Claims**

1. Liquid crystal display (1) comprising

   - image forming layers (10),
   - at least one indirect light source (20), and
   - a light guide (30),

   wherein the light guide (30) comprises a first side (35) facing the image forming layers (10), a second side (36) opposite of the first side (35), and an in-coupling side (34) facing the at least one indirect light source (20), **characterized in that** the in-coupling side (34) is a beveled in-coupling side (34').

2. Liquid crystal display according to claim 1, wherein the image forming layers (10) comprise

   - a LC-layer comprising an array of liquid crystal elements,
   - two polarizing layers,
   - two electrode layers,
   - a color filter layer.

3. Liquid crystal display according to any one of the preceding claims, wherein the beveled in-coupling side (34') is at an angle $\alpha$ with respect to second side (36), the angle $\alpha$ is within one of the following ranges:

   • $1° < \alpha < 89°$ or $91° < \alpha < 179°$ or
   • $5° < \alpha < 85°$ or $95° < \alpha < 175°$ or
   • $30° < \alpha < 85°$ or $95° < \alpha < 150°$.

4. Liquid crystal display according to any one of the preceding claims, wherein the image forming layers (10), the at least one indirect light source (20) and the light guide (30') are arranged to form an indirect back light liquid crystal display.

5. Liquid crystal display according to claim 4, wherein the light guide (30') comprises a reflective layer (32) provided on the second side (36), the reflective layer facing the light guide (30').

6. Liquid crystal display according to any one of the claims 4 - 5, wherein the light guide (30') comprises a first side reflective layer (37) provided on the first side (35), the first side reflective layer facing the light guide (30').

7. Liquid crystal display according to claim 6, wherein the front side reflective layer (37) is provided in a region between an edge of the light guide (30') and a start (39) of an out-coupling structure (31) or the image forming layers (10).

8. Liquid crystal display according to any one of the claims 1 - 3, wherein the image forming layers (10), the at least one indirect light source (20) and the light guide (30') are arranged to form an indirect front light liquid crystal display.

9. Liquid crystal display according to claim 8, wherein the light guide (30') comprises a reflective layer (38) provided on the second side (36), the reflective layer facing (38) the light guide (30').

10. Liquid crystal display according to claim 9, wherein the reflective layer (38) is provided in a region between an edge of the light guide (30') and a start (39) of an out-coupling structure (31) or the image forming layers (10).

11. Liquid crystal display according to any one of the claims 8 - 10, wherein the light guide (30') comprises a first side reflective layer (37) provided on the first side (35), the first side reflective layer (37) facing the light guide (30').

12. Liquid crystal display according to claim 11, wherein the front side reflective layer (37) is provided in a region between an edge of the light guide (30') and a start (39) of an out-coupling structure (31) or the image forming layers (10).

13. Liquid crystal display according to any one of the preceding claims, wherein the front side (35) comprises an out-coupling structure (31) comprising out-coupling features that are distributed in accordance with the beveled in-coupling side (34').

14. Light guide (30) for use in a liquid crystal display using at least one indirect light source (20), the light guide (30') comprising a first side (35) arranged to face image forming layers (10) of the liquid crystal display, a second side (36) opposite of the first side (35), and an in-coupling side (34) facing the at least one indirect light source (20), **characterized in that** the in-coupling side (34) is a beveled in-coupling side (34').

15. Device, comprising a liquid crystal display according to any one of the claims 1 - 13.

## Fig 1a

## Fig 1b

## Fig 1c

## Fig 2

34    35    31    10    30

20

0.3 mm

0.6 mm

21

32    36

## Fig 3a

20

34'    35    31    10    30'

α

21

32    36

## Fig 3b

34'    35    31    10    30'

α

20

21

32    36

## Fig 3c

## Fig 3d

Fig 4a

Fig 4b

*Fig 4c*

*Fig 4d*

# Fig 5a

# Fig 5b

# Fig 5c

Europäisches
Patentamt
European
Patent Office
Office européen
des brevets

# EUROPEAN SEARCH REPORT

**Application Number**

EP 08 16 3930

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/002176 A1 (CHA GUY-HO [KR] ET AL) 6 January 2005 (2005-01-06) * abstract; figures 15-17 * ----- | 1-15 | INV. G02B6/00 |
| X | US 2006/126142 A1 (CHOI JIN-SEUNG [KR]) 15 June 2006 (2006-06-15) * abstract; figures 5a,5b,6 * ----- | 1-15 | |
| X | US 2002/080596 A1 (FUKIHARU EIICHI [JP]) 27 June 2002 (2002-06-27) * abstract; figures 2,3 * ----- | 1-15 | |
| X | US 2005/036296 A1 (KIM HEU-GON [KR] ET AL) 17 February 2005 (2005-02-17) * abstract; figures 2,4,5,7,8 * * paragraph [0030] * ----- | 1 | |
| X | US 6 048 071 A (SAWAYAMA YUTAKA [JP]) 11 April 2000 (2000-04-11) * abstract; figure 1 * ----- | 1 | |
| A | US 2003/043568 A1 (SUZUKI SHINGO [JP] ET AL) 6 March 2003 (2003-03-06) * abstract; figure 2 * ----- | 1 | TECHNICAL FIELDS SEARCHED (IPC) G02B |
| A | US 5 986 727 A (FUKUI ATSUSHI [JP] ET AL) 16 November 1999 (1999-11-16) * abstract; figure 1 * ----- | 1 | |
| A | US 5 926 601 A (TAI CHEN-YU [US] ET AL) 20 July 1999 (1999-07-20) * abstract; figure 2a * * column 3, line 40 - column 4, line 13 * ----- | 1 | |
| A | US 2003/201702 A1 (KIM KYU-SEOK [KR] ET AL) 30 October 2003 (2003-10-30) * abstract; figure 5 * ----- | 1 | |

The present search report has been drawn up for all claims

| Place of search | Date of completion of the search | Examiner |
|---|---|---|
| The Hague | 28 January 2009 | Faderl, Ingo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                             
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 16 3930

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2009

| Patent document cited in search report | | | Publication date | Patent family member(s) | | Publication date |
|---|---|---|---|---|---|---|
| US 2005002176 | A1 | | 06-01-2005 | NONE | | |
| US 2006126142 | A1 | | 15-06-2006 | KR 20060066974 | A | 19-06-2006 |
| US 2002080596 | A1 | | 27-06-2002 | GB 2347549 | A | 06-09-2000 |
| | | | | JP 2000251514 | A | 14-09-2000 |
| US 2005036296 | A1 | | 17-02-2005 | KR 20050018060 | A | 23-02-2005 |
| US 6048071 | A | | 11-04-2000 | CN 1195120 | A | 07-10-1998 |
| | | | | JP 3231655 | B2 | 26-11-2001 |
| | | | | JP 10268307 | A | 09-10-1998 |
| | | | | TW 496991 | B | 01-08-2002 |
| US 2003043568 | A1 | | 06-03-2003 | JP 2003068123 | A | 07-03-2003 |
| US 5986727 | A | | 16-11-1999 | CN 1168479 | A | 24-12-1997 |
| | | | | HK 1005384 | A1 | 14-11-2003 |
| | | | | JP 3330489 | B2 | 30-09-2002 |
| | | | | JP 9274807 | A | 21-10-1997 |
| US 5926601 | A | | 20-07-1999 | WO 9741471 | A1 | 06-11-1997 |
| US 2003201702 | A1 | | 30-10-2003 | CN 1453614 | A | 05-11-2003 |
| | | | | JP 2004004766 | A | 08-01-2004 |
| | | | | KR 20030084302 | A | 01-11-2003 |
| | | | | US 2006002140 | A1 | 05-01-2006 |

EPO FORM P0459

For more details about this annex : see Official Journal of the European Patent Office, No. 12/82